(19) Europäisches Patentamt European Patent Office Office européen des brevets

(11) **EP 1 873 400 A1**

(12) **EUROPEAN PATENT APPLICATION**

(43) Date of publication:
**02.01.2008 Bulletin 2008/01**

(51) Int Cl.:
*F04D 29/28* (2006.01)  *F04D 29/02* (2006.01)

(21) Application number: **06013664.5**

(22) Date of filing: **30.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SIEMENS AKTIENGESELLSCHAFT 80333 München (DE)**

(72) Inventor: **Nilsson, Ulf LE8 6HN Whetston, Leicester (GB)**

(54) **Impeller and method of producing the same**

(57) A method of producing an impeller by forming an impeller blank (100) and subsequently machining the impeller blank (100), **characterised in that** at least two dissimilar materials are joined in the impeller blank (100) before the machining.

## FIG 2

EP 1 873 400 A1

**Description**

The present invention relates to an impeller, in particular an impeller for a turbocharger, and to a method for producing such an impeller.

Turbochargers are, in particular but not exclusively, in common use in a diesel engine environment. Diesel engines are found to require ever increasing turbocharger pressure ratios. Indeed, it has been estimated that every 10 years or so an increase of 0.75 bar is called for, largely as a result of increasingly stringent emissions regulations. As pressure ratio requirements increase, so stresses and temperatures on the impellers of turbochargers increase, which can affect the maximum operational lifespan of the impeller.

The maximum lifespan of an impeller depends primarily on two limiting factors: creep and low-cycle fatigue. Creep is strongly influenced by the time spent at particular stresses and temperatures of the impeller. The sites for creep and low-cycle fatigue do not normally coincide, though it is possible for creep to induce fatigue cracks. The stresses are primarily a function of the rotational speed of the impeller. However, the temperature distribution in the impeller can also produce stresses, which will add to the overall stress level.

The low cycle fatigue normally appears in the centre part of the impeller whereas creep occurs in places which suffer a rise in temperature due to the turbocharger compression action i.e. on the circumference of the impeller. The temperature T of the impeller at a given radius r is give by:

$$T \;=\; T_{amb} \;+\; k \; \frac{\Omega^2 r^2}{2C_p}$$

where $T_{amb}$ is the stagnation temperature at the impeller inlet (typically the ambient temperature), $\Omega$ is the rotor speed in radians per second, $C_p$ is the air specific heat capacity at constant pressure and k is a geometry-related variable, which has an empirical range of values dependent on the impeller geometry. A typical range is, for example, $1 \leq k \leq 2$. k is constant for a particular location on the surface of the impeller. For the surface of the impeller where air is being compressed, $k = 1$, whereas for other parts, including those parts where creep is important, typically the back of the impeller, $k$ may be greater than 1.

In the prior art this issue is addressed according to one or both of the following principles:

The first principle is the exchange of the conventional impeller material Al-alloy to a heavier Ti-alloy. This improves the durability of the impeller but has two disadvantages. The first is that the cost of the impeller blank increases significantly. The second disadvantage is that due to the higher density of Ti compared to Al the inertia of the impeller increases which will generate additional turbo lag i.e. delayed response to load changes.

The second principle is to cool the sites where creep occurs. This can be achieved by directing air jets through nozzles located in the compressor casing to the back of the impeller at the outer circumference. For the cooling to be effective the compressed air must first be cooled in a heat exchanger before it can be used to cool the impeller. For a single stage turbocharger this has the disadvantage that a separate cooling circuit, containing several components and requiring low pressure drop, must be installed for a comparatively low flow. In an intercooled two stage compressor configuration the cooling air may be provided by the intercooler. The exit pressure for the individual compression stages may at the same time be below temperatures where creep occurs during the use of the impeller.

Moreover, from the 1996 TMS Annual Meeting, February 4-8, 1996, Anaheim, California "Joining of dissimilar titanium alloys for dual alloy compressor stage construction" an impeller made from titanium alloy is known which is formed by joining dissimilar titanium alloys. By joining the dissimilar titanium alloys it becomes possible to meet a challenge that alloys and microstructures idealised for the high strength requirements of the bore material are divergent with the alloys and microstructures suitable for the higher temperature creep requirements at the outer, or rim regions of a disk or impeller. In the cited reference, the development of the effective joining methods for dissimilar titanium alloys is discussed. However, seams from joining the dissimilar titanium alloys could be detrimental to the impeller performance and therefore need to be removed in an extra processing step.

With respect to the mentioned prior art, it is an objective of the present invention to provide an improved impeller, in particular for a turbocharger, and a method of producing such an impeller.

This objective is solved by a method of producing an impeller, as claimed in claim 1, and by an impeller, as claimed in claim 7. The depending claims define further developments of the invention.

According to the inventive method of producing an impeller by forming an impeller blank and subsequently machining the impeller blank, at least a first material and a second material which are dissimilar are joined in the impeller blank before the machining. By combining two or more materials in the impeller blank, the impeller can be given the required characteristic throughout, maximising the use of the component life. By joining the materials before the machining begins weld seams can be removed during the subsequent machining, i.e. without the need for an extra processing step.

The impeller is machined so as to have a longitudinal direction with respect to which it shows rotational symmetry and a radial direction. The first material is preferably used in the majority of the impeller while the second material is used where a radial outer part of the impeller is to be formed during the machining. By this design the first material can be particularly adapted so as to be suitable for low cycle fatigue in the central part of the impeller while the second material can be particularly adapted so as to be suitable to resist the creep which usually appears in the radial outer part of the impeller.

A suitable first material is an aluminium based (Al-based) alloy, and a suitable second material is a titanium based (Ti-based) alloy. While the aluminium based alloy provides relatively low mass and sufficient low cycle fatigue resistance, the titanium based alloy provides a high creep resistance in the radial outer part of the impeller, i.e. where the creep usually occurs. In other words, the impeller is designed in such a way as to use a titanium based alloy in the areas of the impeller where creep is expected to occur and to maintain the aluminium based material in the majority of the impeller. This would offer an extended lifespan for a single stage configuration operating at high compressor discharge temperatures without any significant impact on the response time of the turbocharger due to an increase in the weight of the impeller. Furthermore, the increase in component cost is likely to be lower compared to an impeller made fully out of a titanium based alloy.

Due to the fact that aluminium and titanium have different characteristics, they can only be joined by using certain methods. An example of such a method is given by John G. Banker in "Explosion welded transition joints for welds between titanium and dissimilar metals", 1996 TMS Annual Meeting, February 4-8, 1996, Anaheim, California. The use of explosion welding may be applicable when using a thin layer of titanium. However, this method is time consuming, requires special safety arrangements and is difficult to use in large production series. Isostatic pressing (potentially warm) where powder or granular are compressed under high pressure to an object can, in theory, also be used. This method is also time consuming and best suited to complex parts that can be produced to near finished geometry. While both discussed methods are not excluded from being used in the inventive method, it is advantageous to join the at least two dissimilar materials by use of energy beam welding. In such a welding process an energy beam, e.g. an electron beam or a laser beam, is directed onto the area where the joint is to be formed.

In particular, electron beam welding is an established welding method where material thicknesses of up to 400mm can be used which is beyond what is required for the impellers considered. Metallic materials including aluminium, titanium and their alloys, can be successfully welded by using a focussed electron beam. In its most simple form, electron beam welding can be carried out by translating the beam and the parts to be joined with respect to each other, thereby locally melting the material. No filler addition or consumable is necessary, and welding is achieved in a single path almost irrespective of the material thickness. One of the particular advantages offered by the electron beam welding process is that the beam intensity is such that dissimilar materials with vastly different thermal conductivities and melting points can be welded successfully without preferential melting of the lower melting point material.

The laser beam welding, on the other hand, requires larger investment but may be even more advantageous compared to electron beam welding when welding thicker materials due to high welding speed and temperature gradients leading to a short material exposure to elevated temperatures in a narrow heat-effected zone and therefore offering better material properties (fatigue strength).

An inventive impeller, which in particular can be produced using the inventive method, comprises a first impeller section made from an aluminium based material and a second impeller section made from a titanium based material. The first and the second impeller sections are welded to each other.

By using an aluminium based material and a titanium based material in different sections of the impeller it is possible to provide an impeller which has sufficient low cycle fatigue resistance and, at the same time, sufficient creep resistance. This can, in particular, be achieved in an impeller with a longitudinal direction with respect to which it shows rotational symmetry and radial direction, when the first impeller section forms the majority of the impeller and the second impeller section forms a radial outer part of the impeller. By forming the major part of the impeller using an aluminium based alloy, the weight of the impeller can be kept relatively small so that the response time of the turbocharger is not significantly effected. At the same time, by providing the titanium based material in a radial outer part of the impeller, it becomes possible to enhance the creep resistance of the impeller there where the creep is most likely to occur.

Further features, properties and advantages of the present invention will become clear from the following description of embodiments of the invention in conjunction with the accompanying drawings.

Figure 1 schematically shows an inventive impeller in a sectional side view.

Figure 2 shows an impeller blank which is an intermediate step in producing the impeller shown in Figure 1.

Figure 3 shows an impeller blank for producing a second embodiment of the inventive impeller.

Figure 4 shows an impeller blank for producing a third embodiment of the inventive impeller.

Figure 5 shows an impeller blank for producing a fourth embodiment of the inventive impeller.

Figure 6 shows an impeller blank for producing fifth embodiment of the inventive impeller.

Figure 7 shows an impeller blank for producing sixth embodiment of the inventive impeller.

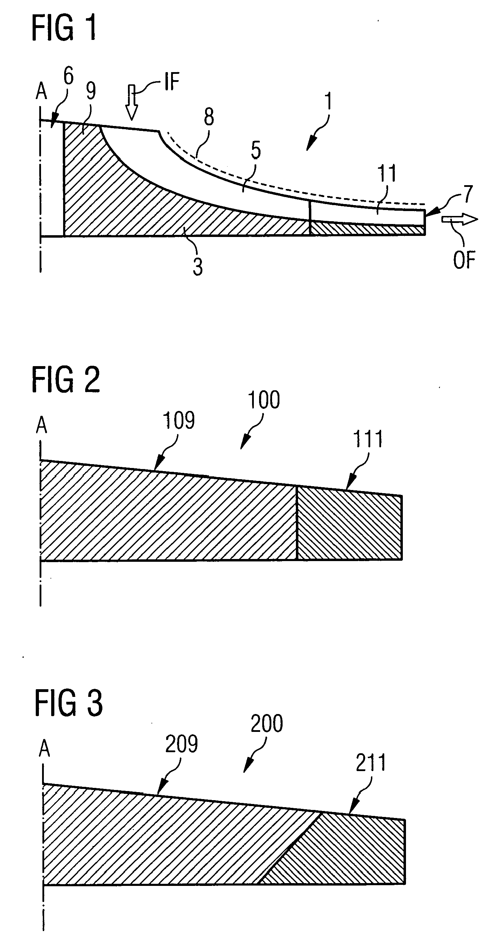

An inventive impeller 1 is schematically shown in Figure 1 in a sectional side view. The impeller 1 shows rotational symmetry about a symmetry axis A and can rotate about the symmetry axis A. It comprises an impeller disc 3 with impeller vanes 5 extending therefrom.

The impeller shown in Figure 1 is generally used in a turbocharger compressor. The compressor is driven by a turbine in the exhaust duct of an internal combustion engine through a shaft connecting the turbine to the compressor and extending through a bore 6 of the impeller.

During operation, air taken into the compressor flows through a channel formed between the impeller disc 3 and a wall of the compressor housing 8 indicated in Figure 1 by a broken line. The air flowing into this channel in an inflow direction IF, is compressed by the impeller vanes 5 due to the rotational movement of the impeller 1 and leaves the channel in an outflow direction OF. The compression raises the temperature of the air, which is highest in an outflow section of the impeller 1.

In the impeller 1, the outflow section 7 experiences the highest creep as the temperature is the highest in this area. On the other hand, the impeller 1 experiences the highest low cycle fatigue in its centre part. Therefore, the inventive impeller 1 comprises two impeller regions, namely a first impeller region 9 which is made of Al or an Al-based alloy and a second impeller region 11 which is made of Ti or a Ti-based alloy. While Al and Al-based alloys are suitable materials for the high low cycle fatigue area of the impeller 1, Ti and Ti-based alloys are suitable materials for the high creep areas of the impeller 1. Therefore, by combining both kinds of materials in an impeller, an impeller can be produced which shows both high low-cycle fatigue resistance as well as high creep resistance. Furthermore, by restricting the more dense titanium or titanium based material to a relatively small section of the impeller 1, the increase in impeller weight compared to an impeller 1 made solely from aluminium or an aluminium based alloy, is relatively small. Therefore, adverse effects on the ability of the impeller 1 to response to load changes can be kept to a minimum.

Producing an impeller 1, as shown in Figure 1, includes the steps of forming an impeller blank 100 and machining the impeller blank 100 to form the impeller 1. An impeller blank 100 which resembles an intermediate step in producing the impeller 1 of Figure 1 is shown in Figure 2. The impeller blank 100 comprises a first impeller blank region 109 and a second impeller blank region 111. The first region 109 is made of Al or an Al-based alloy whereas the second region 111 is made of Ti or a Ti-based alloy. Both regions are formed as individual pieces in a first step and then welded together to form the impeller blank 100.

Due to the fact that Al and Ti have different characteristics only certain methods are suitable for welding them together. Conventional welding would, for example, not work. In the present invention an energy beam welding process is used to weld the second impeller blank region 111 to the first impeller blank region 109. Preferably, electron beam welding or laser beam welding is used as the energy beam welding process. For welding, the beam is moved relative to the parts to be welded so that the electron or laser beam rides over the surface region where both parts 109, 111 about each other and locally melts the materials. After both materials have again solidified, the welding process is finished and the impeller blank 100 is in the state shown in Figure 2. The movement of the electron or laser beam relative to the workpieces to be joined can be effected by moving the beam generating device, by moving the workpieces, or by moving the device and the workpieces.

After the welding process is finished, the impeller blank 100 is machined so as to become the impeller 1 shown in Figure 1. The first impeller blank region thus becomes the first impeller region 9 whereas the second impeller region 111 becomes the second impeller region 11. During the machining also the weld seams are removed.

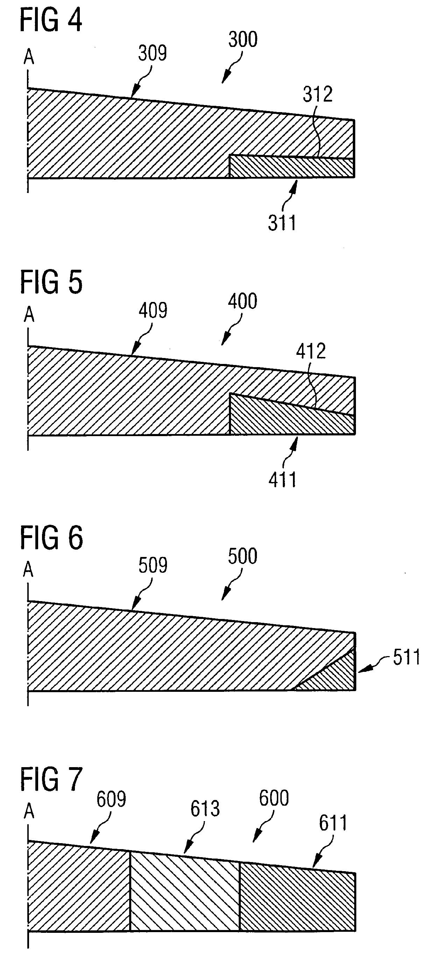

An impeller blank 200 with a first impeller blank region 209 made from Al or an Al-based alloy and a second impeller blank region 211 made from Ti or a Ti-based alloy which represents an intermediate step in producing a second embodiment of the inventive impeller is shown in Figure 3. The impeller blank 200 shown in Figure 3 differs from the impeller blank 100 shown in Figure 2 only by the geometry of the first and second impeller blank regions. While in the impeller blank 100 the joint of the first region and the second region extends parallel to the symmetry axis A, the joint is inclined with respect to the symmetry axis A in the impeller blank 200. The impeller which can be machined from the impeller blank 200 would be very similar to the impeller 1 except for the fact that the joint between the first impeller region and the second impeller region would be inclined with respect to the symmetry axis A.

An impeller blank representing an intermediate step in producing a third embodiment of the inventive impeller is shown in Figure 4. The impeller blank 300 comprises a first impeller blank region 309 and a second impeller blank region 311 where the first region is made of Al or an Al-based alloy and the second region 311 is made of Ti or a Ti-based alloy. In contrast to the impeller blanks 100, 200 shown in Figures 2 and 3, respectively, the second impeller blank region 311 does not extend all the way through the impeller blank 300 in the direction of the symmetry axis A.

An impeller blank 400 representing an intermediate step in producing forming a fourth embodiment of the inventive impeller is shown in Figure 5. The impeller blank 400 comprises a first impeller blank region 409 made of Al or an Al-based alloy and a second impeller blank region 411 made of Ti or a Ti-based alloy. The impeller blank 400 is very similar to the impeller blank 300 shown in Figure 4 except for the direction in which the upper edge of the second impeller blank region 411 extends. While the upper edge 312 of the second impeller blank region 311 in the impeller blank 300 extends substantially perpendicular to the symmetry axis A, the upper edge 412 of the second impeller blank region 411 in the impeller blank 400 is inclined to the direction perpendicular to the symmetry axis A.

An impeller blank 500 representing an intermediate step in forming a fifth embodiment of the inventive impeller is shown in Figure 6. The impeller blank 500 comprises a first impeller blank region 509 made from A1 or an Al-based alloy and a second impeller blank region 511 made from Ti or a Ti-based alloy. In this impeller blank 500 the second impeller blank region 511 is much smaller than in the impeller blanks described previously. The second impeller blank region 511 forms a corner of the impeller blank which, in the impeller 1, lies in the very outer part of the impeller's outflow section and does not extend all the way through the impeller blank 500 in the direction of the symmetry axis A. Hence, in the impeller machined from the impeller blank 500 only the radially very outer part of the impeller is made from Ti or the Ti-based alloy. In this embodiment the amount of Ti or Ti-based alloy in the finished impeller can be kept to a minimum. Thus, the impeller made from the impeller blank 500, compared to the impellers made from the impeller blanks described previously, is the one in which the effect of the second impeller region on the ability to react on load changes is the smallest.

An impeller blank 600 representing an intermediate step in forming a sixth embodiment of the inventive impeller is shown in Figure 7. In contrast to the other impeller blanks described previously, the impeller blank 600 comprises three impeller blank regions 609, 611 and 613 made from different materials. For example, a first impeller blank region 609 can be made of Al or an Al-based alloy, a second impeller blank region 611 can be made of Ti or a Ti-based alloy and a third impeller blank region 613, which is located between the first impeller blank region 609 and the second impeller blank region 611, can be made of a material which may be an alloy of aluminium and titanium. By suitably setting the ratio of Ti and Al in the alloy used for the third impeller blank region 613 a higher freedom in adapting the properties of the impeller made from the impeller blank can be achieved.

Alloys which could be used to produce the third impeller blank region 613 could, in principle, be $Ti_3Al$ or TiAl. Further alloys including additional material components are also suitable, i.e. $Ti_2AlNb$. In addition, the mentioned materials do not need to be used as such but could also form the basis of more sophisticated alloys. However the third impeller blank region can, in principle, also be made of a material which contains neither Al nor Ti.

**Claims**

1. A method of producing an impeller (1) by forming an impeller blank (100, 200, 300, 400, 500, 600) and subsequently machining the impeller blank (100, 200, 300, 400, 500, 600), **characterised in that** at least two dissimilar materials are joined in the impeller blank (100, 200, 300, 400, 500, 600) before the machining.

2. The method as claimed in claim 1, wherein the impeller (1) is machined so as to have a longitudinal direction with respect to which it shows rotational symmetry and a radial direction, and wherein a first material is used in the majority of the impeller while a second material is used where a radial outer part of the impeller is to be formed during the machining.

3. The method as claimed in claim 2, wherein the first material is an Al-based alloy and the second material is a Ti-based alloy.

4. The method as claimed in any of the claims 1 to 3, wherein the at least two dissimilar materials are joined by the use of energy beam welding.

5. The method as claimed in claim 4, wherein the energy beam welding is electron beam welding.

6. The method as claimed in claim 4, wherein the energy beam welding is laser beam welding.

7. An impeller (1) comprising a first impeller section (9) made from an Al-based material and a second impeller section (11) made from a Ti-based material, the second impeller section (11) being welded to the first impeller section (9).

8. The impeller (1) as claimed in claim 7, wherein the impeller (1) has a longitudinal direction with respect to which it shows rotational symmetry and a radial direction, and wherein the first impeller section (9) forms the majority of the impeller (1) while the second impeller section (11) forms a radial outer part of the impeller.

## FIG 1

## FIG 2

## FIG 3

## FIG 4

A  309  300  312

311

## FIG 5

A  409  400  412

411

## FIG 6

A  509  500

511

## FIG 7

A  609  613  600  611

**European Patent Office**

**EUROPEAN SEARCH REPORT**

Application Number

EP 06 01 3664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 184 934 A1 (GARRETT CORP [US]) 18 June 1986 (1986-06-18) * the whole document * | 1,2 | INV. F04D29/28 F04D29/02 |
| X | US 2 479 039 A (VAL CRONSTEDT) 16 August 1949 (1949-08-16) * the whole document * | 1,2 | |
| X | US 2 703 922 A (BRAUCHLER CHANDIS H ET AL) 15 March 1955 (1955-03-15) * the whole document * | 1 | |
| A | EP 0 124 325 A (GARRETT CORP [US]) 7 November 1984 (1984-11-07) * the whole document * | 1,7 | |
| A | US 6 754 954 B1 (DECKER DAVID MICHAEL [US]) 29 June 2004 (2004-06-29) * the whole document * | 1,7 | |
| A | US 2 487 304 A (BRAUCHLER CHARLES A) 8 November 1949 (1949-11-08) * the whole document * | 1,7 | TECHNICAL FIELDS SEARCHED (IPC) F04D F01D |

The present search report has been drawn up for all claims

| Place of search | Date of completion of the search | Examiner |
|---|---|---|
| Munich | 5 December 2006 | Giorgini, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

### ANNEX TO THE EUROPEAN SEARCH REPORT
### ON EUROPEAN PATENT APPLICATION NO.

EP 06 01 3664

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2006

| Patent document cited in search report | | Publication date | Patent family member(s) | | Publication date |
|---|---|---|---|---|---|
| EP 0184934 | A1 | 18-06-1986 | CA | 1235069 A1 | 12-04-1988 |
| | | | DE | 3566429 D1 | 29-12-1988 |
| | | | IL | 77235 A | 15-01-1992 |
| | | | JP | 1575654 C | 24-08-1990 |
| | | | JP | 2001961 B | 16-01-1990 |
| | | | JP | 61142301 A | 30-06-1986 |
| | | | US | 4659288 A | 21-04-1987 |
| US 2479039 | A | 16-08-1949 | NONE | | |
| US 2703922 | A | 15-03-1955 | NONE | | |
| EP 0124325 | A | 07-11-1984 | JP | 1015719 B | 20-03-1989 |
| | | | JP | 1533656 C | 12-12-1989 |
| | | | JP | 60104798 A | 10-06-1985 |
| | | | US | 4850802 A | 25-07-1989 |
| US 6754954 | B1 | 29-06-2004 | EP | 1495819 A1 | 12-01-2005 |
| | | | JP | 2005048769 A | 24-02-2005 |
| US 2487304 | A | 08-11-1949 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Joining of dissimilar titanium alloys for dual alloy compressor stage construction. *Joining of dissimilar titanium alloys for dual alloy compressor stage construction,* 04 February 1996

- **JOHN G. BANKER.** Explosion welded transition joints for welds between titanium and dissimilar metals. *TMS Annual Meeting,* 04 February 1996